# EUROPEAN PATENT APPLICATION

(11) **EP 4 835 321 A1**
(43) Date of publication of application: **04.11.2026**
(21) Application number: 26168179.5
(22) Date of filing: 26.03.2026
(51) Int. Cl.: F16G 1/10, B25J 19/06, E05F 15/665, F16G 1/12, F16P 1/02, F16P 3/00, F16P 3/08

(54) **WORKSTATION**

(30) Priority: 29.04.2025 IT 202500009537
(71) Applicant: G.D S.p.A., 40133 Bologna (IT)
(72) Inventor: CANNAVINA, Matteo, 40133 Bologna (IT); ROMAGNOLI, Stefano, 40133 Bologna (IT)
(74) Representative: Tirloni, Bartolomeo

(57) **Abstract**

Work station (1) comprising a working area (2, 2') comprising a safety barrier (5) arranged at an opening (21) of a perimeter structure (20), the barrier comprising:
- a fixed bulkhead (7) arranged at a lower position;
- a first (8) and a second (9) movable bulkhead movable in sliding along vertical guides (6) between a respective opening position, wherein the movable bulkheads are side-by-side with the fixed bulkhead (7) and a respective closing position wherein the movable bulkheads are in a raised position for closing the opening;
- an actuator (10) for vertically moving the first movable bulkhead (8) alternatively between the respective closing position and the respective opening position;
- a pulley (11) fixed to the first movable bulkhead (8); and
- an elongated transmission element (13) comprising a first end fixed to the fixed bulkhead (7) and a second end fixed to the second movable bulkhead (9), and engaging the first pulley (11) for moving the second movable bulkhead (9) synchronously to a movement of the first movable bulkhead (8);
wherein the work station further comprises:
- a door (3) for allowing access of an operator into the working area (2);
- a robotic arm (4) for manipulating products in crossing of the opening (21);
- one or more sensors for detecting the position of the first (8) and/or second movable bulkhead (9) and
- a control unit in communication with the one or more sensors and programmed for alternatively allowing and denying opening of the door (3) on condition that the detected position of the first (8) and/or second movable bulkhead (9) is respectively the respective closing position and the respective opening position.

## Description

### Technical field of the invention

The present invention relates to a safety barrier for an opening, for example for selectively physically separating a working area served by a robotic arm that passes through the opening, and a work station comprising such safety barrier, the working area and the robotic arm. In a particular embodiment the working area can be located inside a clean room.

### State of the art

US2007113991A1 describes a safety barrier for a robotic work station comprising a pair of vertical uprights and rigid panels cantilevered on an upright, which move between a lower open position and an upper closed position. The simultaneous movement of the panels is managed by a pneumatic cylinder and a pulley system.

### Summary of the invention

In the above context, the Applicant has found that the known safety barriers present some drawbacks and/or can be improved under one or more aspects.

In particular, the Applicant has observed that the safety barrier described in US2007113991A1 is unsuitable for being used in specific working environments, such as, for example, clean rooms and dry rooms, since for example following operation thereof there is a risk of release of particles and/or contaminants, which could compromise the conditions of the room, consequently violating industry regulations (e.g. ISO 14644) and/or deteriorating the production quality, up to a potential production stoppage.

The Applicant has therefore addressed the problem of being able to use a safety barrier for an opening of a working area inside a clean room and/or dry room, with limited or null impact on the critical operating conditions of the clean room or dry room, such as the content of particles in the air and/or the humidity rate.

According to the Applicant the above problem is solved by a safety barrier for an opening according to the appended claims and/or having one or more of the following characteristics.

According to one aspect the invention relates to a safety barrier for an opening. Preferably the barrier comprises a pair of vertical guides.

Preferably the barrier comprises a plurality of bulkheads positioned between said guides and each having development on a respective vertical plane.

Preferably said plurality of bulkheads comprises a fixed bulkhead arranged at a lower position and a first and a second movable bulkhead.

Preferably each movable bulkhead is movable in sliding along said guides between a respective opening position, wherein the movable bulkhead is arranged side-by-side with said fixed bulkhead for leaving said opening free, and a respective closing position wherein the movable bulkhead is in a raised position for closing said opening. Preferably the barrier comprises an actuator configured for vertically moving said first movable bulkhead alternatively between the respective closing position and the respective opening position.

Preferably the barrier comprises a first pulley fixed to said first movable bulkhead, and a first elongated transmission element comprising a first end fixed to the fixed bulkhead and a second end fixed to said second movable bulkhead. Preferably said first elongated transmission element engages said first pulley with a contact face for moving said second movable bulkhead synchronously to a movement of said first movable bulkhead.

Preferably said first elongated transmission element is a belt having said contact face substantially flat.

Preferably said first pulley is substantially cylindrical.

According to one aspect the invention relates to a work station comprising a working area comprising a perimeter structure for physically and selectively preventing an operator from accessing said working area, the perimeter structure comprising a safety barrier according to any embodiment described in the present application, arranged at an opening obtained in said perimeter structure.

According to one aspect the invention relates to a clean room or dry room comprising internally a work station according to any embodiment of the present invention.

The Applicant has experimentally verified that the belt with the substantially (namely with negligible deviations from a condition of perfect planarity) flat contact face and of a substantially (namely with negligible deviations from a condition of perfect cylindricity) cylindrical pulley, provides the safety barrier with excellent performances in terms of reliability and continuity of operation, in particular when used in specific operating conditions, such as, for example, the operating conditions of clean rooms and dry rooms.

In this regard the Applicant believes that the substantially flat geometry of the contact face of the belt and of the contact surface of the pulley, having substantially cylindrical shape, causes a reciprocal rolling between such contact surfaces, avoiding a sliding contact, which in turn would cause the release of particles and the diffusion thereof in the environment, with particularly serious consequences in the context of clean rooms and dry rooms.

Furthermore the above solution generates only rolling friction, with advantages in terms of movement efficiency of the bulkheads with respect to a solution wherein the contact surfaces slide against each other, generating sliding friction.

In the prior art solution, as for example described in US2007113991A1, the use of a chain as elongated transmission element, which meshes with a toothed wheel pulley, causes sliding between the links of the chain and the teeth of the toothed wheel, consequently generating high sliding friction and release of particles due to wear. The present invention in one or more of the above aspects can present one or more of the following preferred characteristics.

Preferably said belt is made of polyurethane, for example for at least 60% by volume of said belt. In this way compatibility of the belt with controlled contamination environments is improved since emission of particles is further reduced.

Preferably said belt internally comprises a plurality of reinforcement elements having development along a main development direction of said belt. Preferably said reinforcement elements are composed of steel or aramid wires. In this way the mechanical resistance of the belt, in particular to traction, is improved, reducing the frequency of maintenance operations and the risk of breakages of the components which could generate contamination of the clean room.

Preferably said belt, on a section orthogonal to the main development line, has rectangular or trapezoidal shape, more preferably has a thickness lower than 20% of the width. Such shape is particularly efficient and rational.

Preferably said belt comprises on the contact face a plurality of indentations having transverse development, distributed (e.g. equidistantly) along a main development line of said belt, more preferably having a maximum depth lower than 10% of a thickness of said belt. In this way flexion of the belt around the pulley is facilitated, avoiding excessive tension on the face opposite to the contact face and/or favouring winding of the contact face on the pulley.

Preferably the barrier comprises a second elongated transmission element comprising a respective first end fixed to the fixed bulkhead and a respective second end fixed to said second movable bulkhead.

Preferably the barrier comprises a second pulley fixed to said first movable bulkhead, wherein said second elongated transmission element engages said second pulley with a respective contact face for moving (in cooperation with said first elongated transmission element) said second movable bulkhead synchronously to said movement of said first movable bulkhead.

Preferably said second elongated transmission element is a belt having said respective contact face substantially flat.

Preferably said second pulley is substantially cylindrical.

Preferably said first and second pulley are arranged on opposite sides of said actuator along said horizontal development direction of the first movable bulkhead, more preferably in symmetrical position with respect to said actuator. In this way a balanced distribution of the forces and of the mechanical loads on the movable bulkheads is obtained, improving the dynamic balance thereof during operation and the smoother and more balanced movement, with advantages in terms of limitation of wear of the components in contact with the guides and of production of particles dispersible in air. Preferably said first and second pulley are arranged at horizontally opposite ends of said first movable bulkhead (for the purpose of increasing the overall balancing of the loads). For example, said first pulley is arranged (starting from one end of the bulkhead) within 20% of the length of the bulkhead, for example within 10%, and said second pulley is arranged beyond 80% of the length of the bulkhead, for example beyond 90%.

Preferably each movable bulkhead comprises a respective first trolley which slidingly engages one of said sliding guides.

Preferably each first trolley comprises at least one lubricating element configured for sliding along said sliding guide. In this way reduction of friction and mechanical wear between the surfaces in contact is optimized, thus also improving the smoothness of movement thereof and the durability of the whole sliding system, thanks to the additional integration of the lubrication function.

Preferably said lubricating element is a sponge impregnated with a lubricating oil. In this way the sponge collects the particles and/or contaminating agents possibly generated at the guides (e.g. by the contact between trolleys and guides). In fact, possible dirt (e.g. microparticles) released due to abrasion is trapped in the porous structure of the sponge thanks to the lubricating oil, preventing diffusion thereof in the surrounding environment.

Preferably the perimeter structure comprises at least one door, distinct from said barrier, for allowing access of an operator into said working area. In this way the operator can operate in the working area, for example for feeding a loaded pallet and withdrawing an unloaded pallet or vice versa.

Preferably the work station comprises a robotic arm having a base arranged externally to said working area for manipulating products in crossing of said opening. In this way the robotic arm, when the opening is closed by the safety barrier, remains physically completely separated from the working area.

Preferably the work station comprises one or more sensors for detecting a position of said first and/or second movable bulkhead and a control unit in communication with said one or more sensors and programmed for alternatively allowing and denying an opening of said door on condition that said detected position of said first and/or second movable bulkhead is respectively said respective closing position and said respective opening position. In this way the situation wherein the operator enters the working area with the opening open, and therefore potentially with the robotic arm operating in the working area through the opening, is avoided. Furthermore, such safety control logic avoids the necessity of stopping the robotic arm following an unauthorized access of the operator into the working area (necessity which instead occurs in comparative solutions wherein presence sensors detect the presence of an operator and cause stopping of the robotic arm, and therefore of the production). The Applicant observes that the above control logic of the opening of the door produces the above technical effects independently from the working environment wherein the work station operates (namely both in clean room/dry room and in other working contexts, also non-regulated), and independently from the specific structure of the safety barrier (e.g. independently from the specific solutions adopted for the movement of the bulkheads). Preferably said control unit of said work station is programmed for allowing a movement of said first and second movable bulkhead from said respective closing position to said respective opening position only on condition that said door is closed.

Such solution achieves a high safety in the working area, since the situation wherein an operator is in the working area (condition possible following the condition of open door) with the movable bulkheads lowered, namely with open opening and consequent potential risk of contact between the robotic arm (and/or the objects manipulated by the robotic arm) and the operator, is avoided.

Preferably said work station comprises a further working area comprising a further perimeter structure for physically and selectively preventing access of an operator into said further working area.

Preferably said further perimeter structure comprises a further safety barrier according to any embodiment of the present invention, arranged at a further opening obtained in said further perimeter structure.

Preferably said robotic arm has said base arranged externally also to said further working area for manipulating products in crossing also of said further opening. Preferably said further perimeter structure comprises at least one further door, distinct from said further safety barrier, for allowing access of an operator into said further working area.

In this way it is possible to efficiently subdivide the operational activities of the industrial process, for example allowing feeding (e.g. by operator) of loaded pallets in one of the two working areas while the robotic arm operates (e.g. unloads the pallet) in the other working area.

Preferably said work station comprises one or more further sensors for detecting a position of said first and/or second movable bulkhead of said further safety barrier.

More preferably said control unit is in communication with said one or more further sensors and is programmed for alternatively allowing and denying an opening of said further door on condition that said detected position of said first and/or second movable bulkhead of said further safety barrier is respectively said respective closing position and said respective opening position. In this way, the high safety for the operators explained above is also obtained in the further working area.

### Brief description of the figures

Figure 1 schematically and partially shows a work station comprising a safety barrier for an opening according to the present invention;
figures 2 and 3 schematically and partially show a front view of the barrier of figure 1 respectively in the opening configuration and in the closing configuration;
figure 4 schematically and partially shows a top view of the barrier of figure 1;
figure 5 shows a detail of figure 4;
figure 6 shows a detail of a side view of the barrier of figure 1;
figure 7 schematically and partially shows a side view of the barrier of figure 1 in the opening configuration;
figures 8-10 show a respective detail of figure 7.

### Detailed description of some embodiments of the invention

The characteristics and the advantages of the present invention will be further clarified by the following detailed description of some embodiments, presented by way of nonlimiting example of the present invention, with reference to the attached figures.

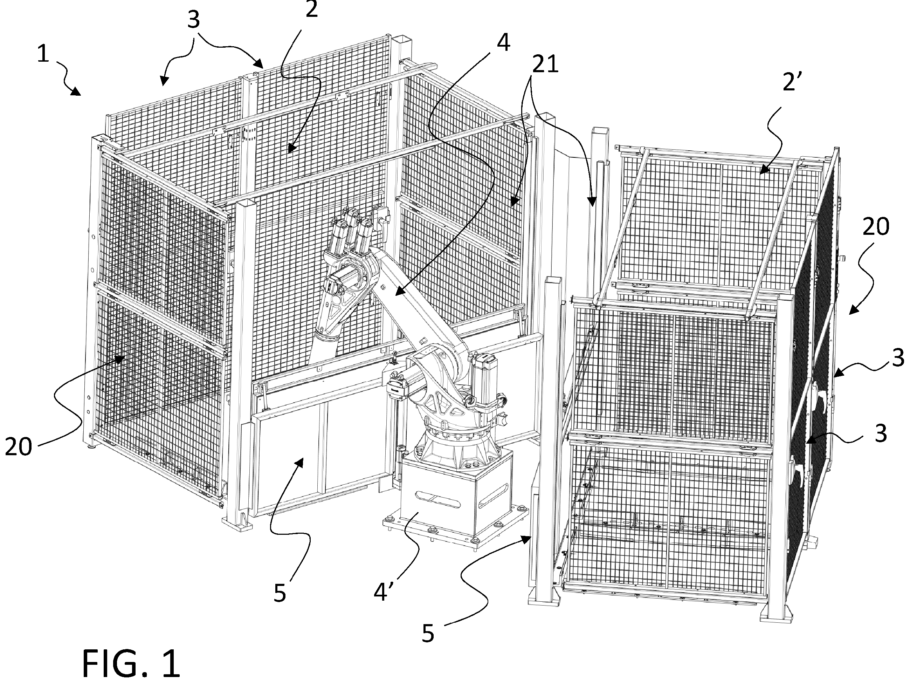

In figure 1, with number 1 a work station arranged inside a clean room or dry room (not further shown or described since, for example, of known type) is generally indicated.

The work station 1 comprises two distinct working areas 2, 2', each working area comprising a respective perimeter structure 20 which delimits the working area along the whole perimeter for physically and selectively preventing access of an operator to the working area.

Each perimeter structure 20 comprises a safety barrier 5, arranged at an opening 21 obtained in the perimeter structure. In the example each barrier 5 forms a rectilinear side of the respective perimeter structure 20.

Exemplarily the perimeter structure 20 comprises, for each working area 2, 2', at least one door 3 (in the illustrated example two doors 3 for each area which form a rectilinear side of the respective perimeter structure 20), arranged on a side of the perimeter structure opposite to the respective safety barrier 5, for allowing access of an operator to the working area. Exemplarily the perimeter structure 20, including the doors 3 but excluding the safety barrier 5, is constituted by protection panels in metal mesh supported by vertical uprights, the whole forming a protective cage.

Exemplarily the work station 1 comprises a robotic arm 4 interposed between the two working areas 2, 2' and having a base 4' arranged externally to both working areas 2, 2', for manipulating products in crossing of the opening 21 of both working areas. Exemplarily the two working areas 2, 2' (including the two safety barriers 5) are structurally identical to each other.

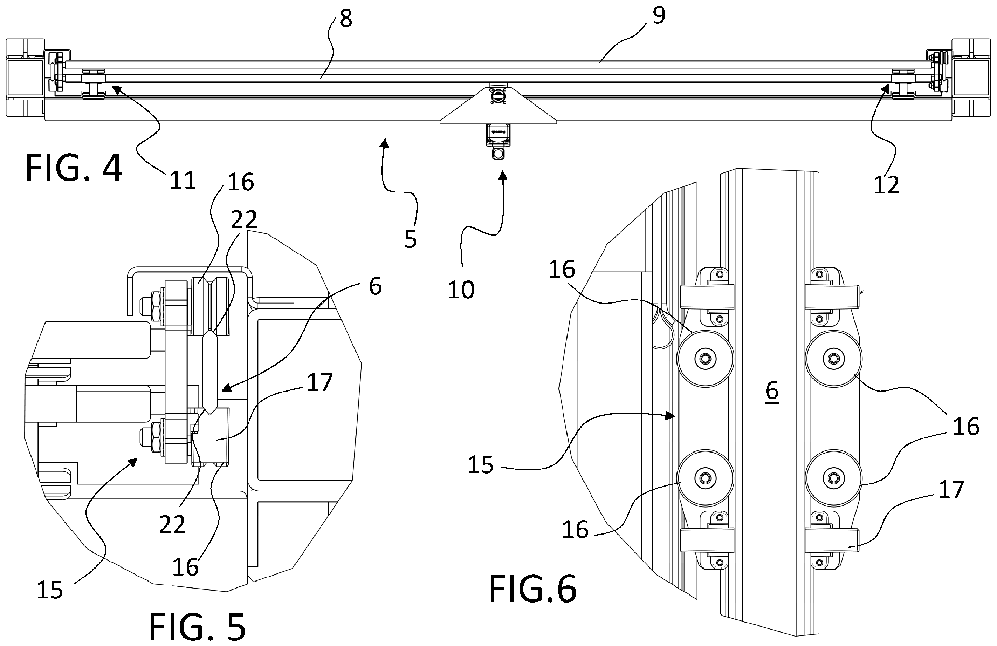

Exemplarily the barrier 5 comprises a pair of vertical guides 6 fixed to, and supported by, respective vertical uprights of the perimeter structure 20. Exemplarily each guide 6 is constituted by a vertical bar which presents a pair of vertical rails 22 opposite to each other, wherein each rail, in a horizontal section, has convex V-shape, namely with the vertex facing externally (Fig. 5).

The barrier 5 comprises a plurality of bulkheads positioned between the guides 6 and each having development on a respective vertical plane, such vertical planes being parallel to each other.

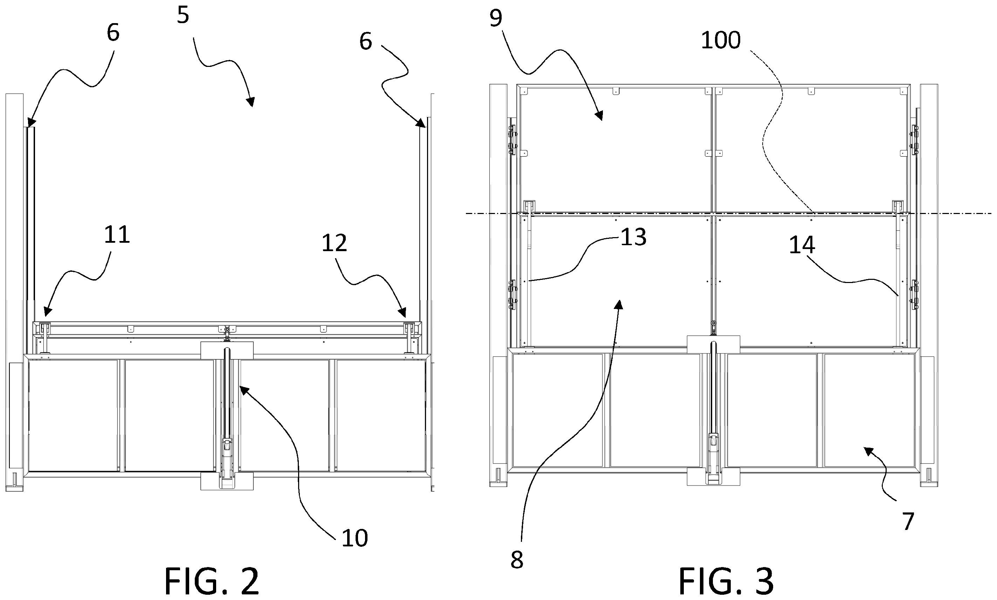

Exemplarily, as in the shown embodiment, the plurality of bulkheads comprises a fixed bulkhead 7 arranged at a lower position to the opening, a first movable bulkhead 8 and a second movable bulkhead 9, wherein the movable bulkheads 7,8 are movable in sliding along the same guides 6 (thanks to the vertically staggered position of the trolleys on the two movable bulkheads), between a respective opening position (figure 2), wherein each movable bulkhead is horizontally side-by-side with the fixed bulkhead 7 (with the first movable bulkhead horizontally interposed between the fixed bulkhead and the second movable bulkhead), in order to leave the opening free, and a respective closing position (figure 3) wherein each movable bulkhead is in a raised position for completely closing the opening 21. In particular, in the closing position the second movable bulkhead 9 is higher than the first movable bulkhead 8, and the first movable bulkhead 8 is higher than the fixed bulkhead 7 (namely vertically interposed between the other two bulkheads).

Exemplarily the barrier 5 comprises an actuator 10 for vertically moving the first movable bulkhead 8 alternatively between the respective closing position and the respective opening position.

Exemplarily the actuator 10 comprises a fixed portion, fixed to the fixed bulkhead, and a movable portion, fixed to the first movable bulkhead 8 in a median position of the first movable bulkhead 8, with reference to a horizontal development direction 100 of the first movable bulkhead 8. With median position it is meant that the movable portion contacts the movable bulkhead 8 in at least one point of the movable bulkhead 8 comprised between 40% and 60% of the length of the movable bulkhead 8 itself along the horizontal development 100.

Exemplarily the actuator 10 is electric of ball screw type, wherein the movable portion comprises a helical screw which meshes with a motorized toothed wheel of the fixed portion.

In one embodiment the actuator 10 comprises a ratchet emergency brake (not shown). Exemplarily the barrier 5 comprises a first 11 and a second pulley 12 directly fixed to an upper side of the first movable bulkhead 8 on opposite sides of the actuator 10 along the horizontal development direction 100 of the first movable bulkhead 8, in symmetrical position with respect to the actuator 10 (for example at horizontally opposite ends of the first movable bulkhead 8).

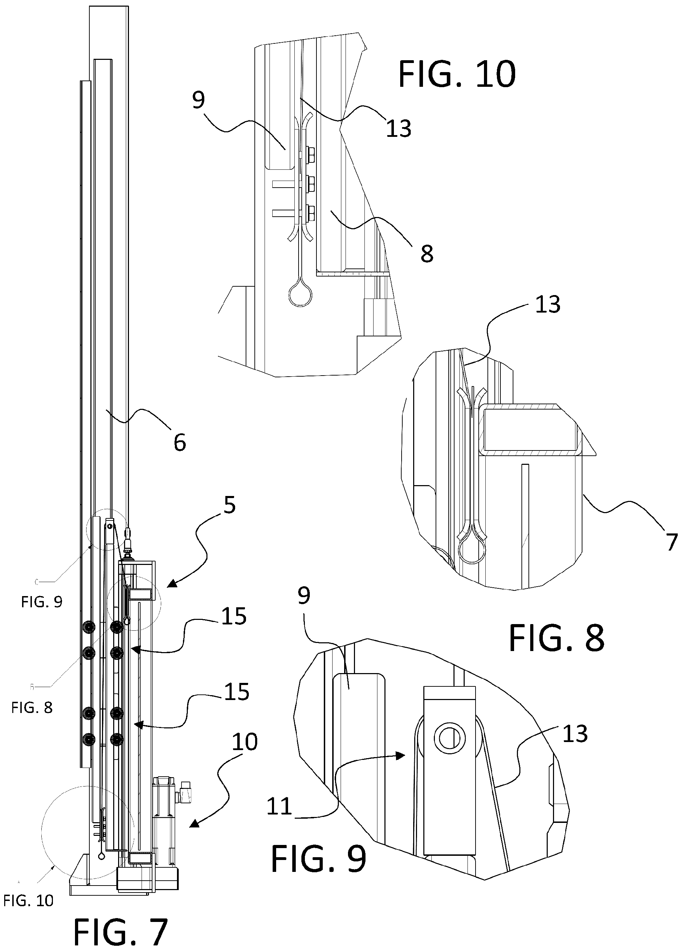

Exemplarily the pulleys 11, 12 are cylindrical (namely comprise a rotatable roller having cylindrical shape, visible in fig. 9), with horizontal rotation axis and parallel to the main development direction 100 of the bulkheads.

Exemplarily the barrier 5 comprises a first and second elongated transmission element 13,14 comprising a first end fixed to (e.g. directly fixed to an upper side of) the fixed bulkhead 7 (fig. 8) and a second end fixed to (e.g. a lower side of) the second movable bulkhead 9. Exemplarily the first and second elongated transmission element 13,14 respectively engage the first 11 and the second pulley 12 with a respective contact face, for moving the second movable bulkhead 9 synchronously to the movement of the first movable bulkhead 8. Exemplarily the kinematic mechanism constituted by the first and second pulley and by the first and second element of transmission allows displacement of the second movable bulkhead 9 by a vertical distance equal to twice the vertical distance travelled by the first movable bulkhead 8.

Exemplarily each elongated transmission element 13, 14 is a belt, e.g. in polyurethane reinforced with reinforcement elements in stainless steel or kevlar. Exemplarily the reinforcement element can be a single wire or a strand or a rope.

Exemplarily the contact face of each elongated transmission element 13, 14 is substantially flat, in order to correspond with the cylindrical surface of the respective pulley. Substantially flat means with negligible deviations from the condition of planarity, such as for example indentations (not shown) having transverse development, distributed equidistantly along the belt and having a maximum depth lower than 10% of the thickness of the belt.

Exemplarily each elongated transmission element 13, 14 is on a side of the respective barrier 5 external with respect to the respective working area 2, 2'.

Exemplarily the barrier 5 comprises, for each movable bulkhead 8,9, two trolleys 15, shown in detail in figures 5 and 6, which slidingly engage respectively the two guides 6. Exemplarily each pair of trolleys 15 supports the respective movable bulkhead 8,9 at respective horizontally opposite ends of the respective movable bulkhead 8,9. Exemplarily each trolley 15 comprises, for each rail 22, a respective pair of rollers 16 vertically superposed which engage the rail in rolling, wherein each roller 16 has a circular groove countershaped to the V rail and which engages the rail in rolling (fig. 5). In other words, each trolley comprises four rollers opposite in pairs both horizontally and vertically.

Exemplarily each trolley 15 comprises, in proximity of each roller 16, a lubricating element 17 configured for sliding along the sliding guide, in particular along the respective rail 22. It is observed that in figures 4 and 5 one of such lubricating elements has been removed for better showing the underlying roller.

Exemplarily the lubricating element is a sponge impregnated with a lubricating oil.

In an embodiment not shown the barrier 5 comprises a third (and possibly one or more further) movable bulkhead arranged in series with the first and second movable bulkhead 8, 9, for closing a vertically higher opening and/or reducing the vertical height and/or the excursion of the movement of each movable bulkhead. In such case, the third movable bulkhead is coupled to the second movable bulkhead similarly to the coupling between the first and the second movable bulkhead 8,9 (e.g. by means of a further system of belts and pulleys).

Exemplarily the work station 1 comprises one or more sensors (not shown) for detecting the position of the first and/or second movable bulkhead of each safety barrier 5.

Exemplarily the work station 1 comprises a control unit (not shown) in communication with such sensors and programmed for alternatively allowing and denying an opening of a door 3 of one of the two working areas 2, 2' on condition that the detected position of the first and/or second movable bulkhead of the barrier 5 of such working area is the respective closing position and the respective opening position, respectively. Preferably the control unit is programmed for allowing a movement of the first and second movable bulkhead from the respective closing position to the respective opening position only on condition that the respective door 3 (i.e. all the respective doors 3) are closed.

## Claims

1. Work station (1) comprising:
- a working area (2) comprising a perimeter structure (20) for physically and selectively preventing access of an operator into said working area (2), wherein the perimeter structure (20) comprises a safety barrier (5) arranged at an opening (21) obtained in said perimeter structure (20), wherein said barrier comprises:
- a pair of vertical guides (6);
- a plurality of bulkheads positioned between said guides and each having development on a respective vertical plane, wherein said plurality of bulkheads comprises:
- a fixed bulkhead (7) arranged at a lower position; and
- a first (8) and a second (9) movable bulkhead, each movable bulkhead being movable in sliding along said guides (6) between a respective opening position, wherein the movable bulkhead is side-by-side with said fixed bulkhead (7) for leaving said opening free, and a respective closing position wherein the movable bulkhead is in a raised position for closing said opening;
- an actuator (10) configured for vertically moving said first movable bulkhead (8) alternatively between the respective closing position and the respective opening position;
- a first pulley (11) fixed to said first movable bulkhead (8); and
- a first elongated transmission element (13) comprising a first end fixed to the fixed bulkhead (7) and a second end fixed to said second movable bulkhead (9), said first elongated transmission element (13) engaging said first pulley (11) with a contact face for moving said second movable bulkhead (9) synchronously to a movement of said first movable bulkhead (8),
wherein said station further comprises:
- at least one door (3), distinct from said barrier (5), for allowing access of an operator into said working area (2);
- a robotic arm (4) having a base (4') arranged externally to said working area (2) for manipulating products in crossing of said opening (21);
- one or more sensors for detecting a position of said first (8) and/or second movable bulkhead (9), and
- a control unit in communication with said one or more sensors and programmed for alternatively allowing and denying an opening of said door (3) on condition that said detected position of said first (8) and/or second movable bulkhead (9) is respectively said respective closing position and said respective opening position.

2. Work station (1) according to claim 1, wherein said first elongated transmission element (13) is a belt having said contact face substantially flat and wherein said first pulley (11) is substantially cylindrical.

3. Work station (1) according to claim 2, wherein said belt is made of polyurethane.

4. Work station (1) according to claim 2 or 3, wherein said belt internally comprises a plurality of reinforcement elements having development along a main development direction of said belt.

5. Work station (1) according to claim 4, wherein said reinforcement elements are composed of steel or aramid wires.

6. Work station (1) according to any one of claims 2 to 5, wherein said belt, on a section orthogonal to the main development line, has rectangular or trapezoidal shape having thickness lower than 20% of a width of said belt, and wherein said belt comprises a plurality of indentations having transverse development, distributed along a main development line of said belt.

7. Work station (1) according to any one of the preceding claims, wherein each movable bulkhead (8, 9) comprises a respective first trolley (15) which slidingly engages one of said sliding guides (6), and wherein each first trolley (15) comprises at least one lubricating element (17) configured for sliding along said sliding guide (6).

8. Work station (1) according to claim 7, wherein said lubricating element (17) is a sponge impregnated with a lubricating oil.

9. Work station (1) according to any one of the preceding claims, wherein said control unit is programmed for allowing a movement of said first and second movable bulkhead (8, 9) from said respective closing position to said respective opening position only on condition that said door (3) is closed.

10. Work station (1) according to any one of the preceding claims, comprising:
- a further working area (2') comprising a further perimeter structure (20) for physically and selectively preventing access of an operator into said further working area (2'), wherein the further perimeter structure (20) comprises a further barrier (5) arranged at a further opening (21) obtained in said further perimeter structure (20), said robotic arm (4) having said base (4') arranged externally also to said further working area (2') for manipulating products in crossing also of said further opening (21), wherein said further barrier (5) comprises:
- a pair of respective vertical guides (6);
- a plurality of respective bulkheads positioned between said respective guides and each having development on a respective vertical plane, wherein said plurality of respective bulkheads comprises:
- a respective fixed bulkhead (7) arranged at a lower position; and
- a respective first (8) and a respective second (9) movable bulkhead, each respective movable bulkhead being movable in sliding along said respective guides (6) between a respective opening position, wherein the movable bulkhead is side-by-side with said respective fixed bulkhead (7) for leaving said further opening (21) free, and a respective closing position wherein the movable bulkhead is in a raised position for closing said further opening (21);
- a respective actuator (10) configured for vertically moving said respective first movable bulkhead (8) alternatively between the respective closing position and the respective opening position;
- a respective first pulley (11) fixed to said respective first movable bulkhead (8); and
- a respective first elongated transmission element (13) comprising a respective first end fixed to the respective fixed bulkhead (7) and a respective second end fixed to said respective second movable bulkhead (9), said respective first elongated transmission element (13) engaging said respective first pulley (11) with a respective contact face for moving said respective second movable bulkhead (9) synchronously to a movement of said respective first movable bulkhead (8);
wherein the work station further comprises:
- at least one further door (3), distinct from said further barrier (5), for allowing access of an operator into said further working area (2'),
- one or more further sensors for detecting a position of said first and/or second movable bulkhead (8, 9) of said further barrier (5),
wherein said control unit is in communication with said one or more further sensors and is programmed for alternatively allowing and denying an opening of said further door (3) on condition that said detected position of said first and/or second movable bulkhead (8, 9) of said further barrier (5) is respectively said respective closing position and said respective opening position.

11. Clean room or dry room comprising internally the work station (1) according to any one of the preceding claims.
